# EUROPÄISCHE PATENTSCHRIFT

(11) **EP 3 580 078 B1**
(45) Veröffentlichungstag und Bekanntmachung des Hinweises auf die Patenterteilung: **29.04.2020**
(21) Anmeldenummer: 19706381.1
(22) Anmeldetag: 29.01.2019
(51) Int. Cl.: B60K 1/04, H01M 2/10

(54) **VERFAHREN ZUM HERSTELLEN EINES HOCHVOLT-ENERGIESPEICHERS FÜR EIN KRAFTFAHRZEUG, SOWIE HOCHVOLT-ENERGIESPEICHER FÜR EIN KRAFTFAHRZEUG**
METHOD FOR PRODUCING A HIGH-VOLTAGE ENERGY STORAGE DEVICE FOR A MOTOR VEHICLE, AND HIGH-VOLTAGE ENERGY STORAGE DEVICE FOR A MOTOR VEHICLE
PROCÉDÉ POUR LA FABRICATION D'UN ACCUMULATEUR D'ÉNERGIE À HAUTE TENSION POUR UN VÉHICULE À MOTEUR, AINSI QU'ACCUMULATEUR D'ÉNERGIE À HAUTE TENSION POUR UN VÉHICULE À MOTEUR

(30) Priorität: 07.03.2018 DE 102018203375
(43) Veröffentlichungstag der Anmeldung: 18.12.2019
(73) Patentinhaber: Audi AG, 85045 Ingolstadt (DE)
(72) Erfinder: SCHIELER, Oliver, 67657 Kaiserslauten (DE); WEISS, Thomas, 85113 Böhmfeld (DE)
(86) Internationale Anmeldenummer: PCT/EP2019/052041
(87) Internationale Veröffentlichungsnummer: WO 2019/170322

(56) Entgegenhaltungen:
- EP-A1- 3 382 774
- EP-A1- 3 427 986
- WO-A1-2017/207502
- DE-A1-102013 011 895
- DE-A1-102015 111 749
- US-A1- 2012 312 614
- US-A1- 2016 222 631

## Beschreibung

Die Erfindung betrifft ein Verfahren zum Herstellen eines Hochvolt-Energiespeichers für ein Kraftfahrzeug gemäß dem Oberbegriff von Patentanspruch 1. Ferner betrifft die Erfindung einen Hochvolt-Energiespeicher für ein Kraftfahrzeug.

Ein solches Verfahren zum Herstellen eines zum Speichern von elektrischer Energie beziehungsweise elektrischem Strom ausgebildeten Hochvolt-Energiespeichers für ein Kraftfahrzeug, insbesondere für einen Kraftwagen, ist beispielsweise bereits aus der DE 10 2014 226 566 B3 bekannt. Bei dem Verfahren werden Speichermodule zumindest teilweise in einem Aufnahmeraum eines Speicherkastens des Hochvolt-Energiespeichers angeordnet. Die DE 10 2015 224 777 A1 offenbart ein Batteriegehäuse für eine Traktionsbatterie eines elektrisch betriebenen Fahrzeugs, mit einem Gehäusedeckel und einem Gehäuseunterteil.

Außerdem ist aus der DE 10 2016 110 335 A1 eine Batterieaufnahme zur Aufnahme von Batterieelementen, insbesondere für ein Kraftfahrzeug, bekannt. Die Batterieaufnahme weist einen einen Innenbereich bildenden Kasten auf, welcher zumindest teilweise Seitenwände der Batterieaufnahme bereitstellt.

Außerdem noch offenbart die DE 10 2013 011895 A1 ein Verfahren zum Herstellen eines zum Speichern von elektrischer Energie ausgebildeten Hochvolt-Energiespeichers gemäß dem Oberbegriff des Anspruchs 1.

Aufgabe der vorliegenden Erfindung ist es, ein Verfahren und einen Hochvolt-Energiespeicher der eingangs genannten Art zu schaffen, sodass auf besonders vorteilhafte Weise eine besonders vorteilhafte Kühlung realisiert werden kann.

Diese Aufgabe wird erfindungsgemäß durch ein Verfahren mit den Merkmalen des Patentanspruchs 1 sowie durch einen Hochvolt-Energiespeicher mit den Merkmalen des Patentanspruchs 11 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Herstellen eines zum Speichern von elektrischer Energie beziehungsweise elektrischem Strom ausgebildeten Hochvolt-Energiespeichers für ein Kraftfahrzeug, insbesondere für einen vorzugsweise als Personenkraftwagen ausgebildeten Kraftwagen. Der Hochvolt-Energiespeicher wird auch als Energiespeicher oder Speichereinrichtung bezeichnet und ist ein Hochvolt-Energiespeicher, da der Hochvolt-Energiespeicher eine elektrische Spannung, insbesondere eine elektrische Betriebsspannung von mehr als 50 Volt aufweist beziehungsweise bereitstellt. Insbesondere beträgt die elektrische Spannung, insbesondere die elektrische Betriebsspannung, des Hochvolt-Energiespeichers mehrere hundert Volt, um dadurch beispielsweise besonders große elektrische Leistungen zum elektrischen Antreiben des beispielsweise als Elektrofahrzeug oder Hybridfahrzeug ausgebildeten Kraftfahrzeugs realisieren zu können. In seinem vollständig hergestellten Zustand umfasst das Kraftfahrzeug den Hochvolt-Energiespeicher und wenigstens eine elektrische Maschine, mittels welcher wenigstens ein Rad beziehungsweise das Kraftfahrzeug insgesamt elektrisch angetrieben werden kann. Hierzu wird die elektrische Maschine in einem Motorbetrieb und somit als Elektromotor betrieben. Um die elektrische Maschine in dem Motorbetrieb zu betreiben, wird die elektrische Maschine mit elektrischer Energie versorgt, die in dem Hochvolt-Energiespeicher gespeichert ist. Da das Kraftfahrzeug mittels der elektrischen Maschine elektrisch angetrieben werden kann, wird die elektrische Maschine auch als Traktionsmaschine bezeichnet. Da die Traktionsmaschine mit in dem Hochvolt-Energiespeicher gespeicherter elektrischer Energie versorgbar ist, wird der Hochvolt-Energiespeicher auch als Traktionsspeicher bezeichnet.

Der Hochvolt-Energiespeicher kann beispielsweise als Batterie, das heißt als Hochvolt-Batterie (HV-Batterie) ausgebildet sein, sodass dann der Hochvolt-Energiespeicher beispielsweise als Traktionsbatterie bezeichnet wird.

Bei dem Verfahren werden Speichermodule zumindest teilweise in einem Aufnahmeraum eines Speicherkastens des Hochvolt-Energiespeichers angeordnet. Das jeweilige Speichermodul umfasst beispielsweise genau eine Speicherzelle, mittels beziehungsweise in welcher elektrische Energie gespeichert werden kann. Insbesondere kann vorgesehen sein, dass das jeweilige Speichermodul mehrere Speicherzellen zum Speichern von elektrischer Energie aufweist, wobei die Speicherzellen des jeweiligen Speichermoduls elektrisch miteinander verbunden sein können. Ist der Hochvolt-Energiespeicher als Batterie ausgebildet, so ist die jeweilige Speicherzelle beispielsweise als Batteriezelle ausgebildet, sodass dann das Speichermodul als ein Batteriemodul ausgebildet ist. Insbesondere ist es denkbar, dass die Batteriemodule elektrisch miteinander verbunden sind. Hierdurch können besonders große elektrische Leistungen zum Antreiben des Kraftfahrzeugs realisiert werden.

Um nun auf besonders vorteilhafte Weise eine besonders vorteilhafte Kühlung realisieren zu können, weist das Verfahren erfindungsgemäß einen ersten Schritt auf, bei welchem eine Boden-Kühlstruktur des Speicherkastens bereitgestellt wird. Die Boden-Kühlstruktur weist zwei voneinander beabstandete Deckelemente und zwischen den Deckelementen verlaufende und von einem Kühlfluid, insbesondere einer Kühlflüssigkeit, durchströmbare Kühlkanäle auf, welche beispielsweise fluidisch miteinander verbunden sind. Somit bilden die Kühlkanäle beispielsweise einen oder mehrere zusammenhängende und von dem Kühlfluid durchströmbare Kühlkanäle. Der jeweilige Kühlkanal verläuft beispielsweise zumindest im Wesentlichen mäanderförmig zwischen den Deckelementen. Da die Deckelemente der Boden-Kühlstruktur die Kühlkanäle jeweils zumindest teilweise begrenzen, sind die Kühlkanäle in die Boden-Kühlstruktur integriert. Insbesondere begrenzen die Deckelemente die Kühlkanäle jeweils direkt, sodass das durch die Kühlkanäle strömende Fluid die Deckelemente direkt anströmen beziehungsweise berühren kann. Die Boden-Kühlstruktur begrenzt den Aufnahmeraum des Speicherkastens in eine erste Richtung, welche beispielsweise in Einbaulage des Hochvolt-Energiespeichers in Fahrzeughochrichtung nach unten verläuft. Dabei nimmt der Hochvolt-Energiespeicher seine Einbaulage in vollständig hergestelltem Zustand des Kraftfahrzeugs ein, welches in seinem vollständig hergestellten Zustand den Hochvolt-Energiespeicher aufweist. Die Boden-Kühlstruktur ist somit eine Komponente des Speicherkastens, wobei die Komponente sowohl einen den Aufnahmeraum in die genannte erste Richtung begrenzenden Boden bildet als auch die Kühlkanäle aufweist, welche in den Boden integriert sind.

Das Verfahren umfasst erfindungsgemäß einen zweiten Schritt, bei welchem eine separat von der Boden-Kühlstruktur ausgebildete Seitenwandstruktur des Speicherkastens bereitgestellt wird. Die Boden-Kühlstruktur und die Seitenwandstruktur sind somit separat voneinander ausgebildete Komponenten des Speicherkastens, wobei die Komponenten zunächst in voneinander getrenntem beziehungsweise nicht miteinander verbundenem Zustand und somit separat bereitgestellt werden, sodass die Komponenten zunächst noch nicht miteinander verbunden sind. Der erste Schritt und der zweite Schritt können in beliebiger Reihenfolge durchgeführt werden.

Bei einem dritten Schritt des erfindungsgemäßen Verfahrens werden die Speichermodule mit der Boden-Kühlstruktur gefügt, indem die Speichermodule mit zumindest einem der Deckelemente, insbesondere stoffschlüssig, verbunden werden. Durch dieses stoffschlüssige Verbinden der Speichermodule mit dem zumindest einen Deckelement kann eine besonders vorteilhafte thermische Anbindung der Speichermodule an das zumindest eine Deckelement beziehungsweise an die Boden-Kühlstruktur realisiert werden, sodass die Speichermodule besonders vorteilhaft wärmeübertragend mit der Boden-Kühlstruktur gekoppelt sind. Hierdurch kann ein besonders vorteilhafter Wärmeübergang von den Speichermodulen an die Boden-Kühlstruktur gewährleistet werden. In der Folge kann in kurzer Zeit eine besonders hohe Wärmemenge von den Speichermodulen abtransportiert werden, da beispielsweise Wärme besonders vorteilhaft von den Speichermodulen an die Boden-Kühlstruktur und von dieser an das die Kühlkanäle durchströmende Kühlfluid realisiert werden kann.

Das erfindungsgemäße Verfahren umfasst ferner einen vierten Schritt, welcher nach dem dritten Schritt durchgeführt wird. Bei dem vierten Schritt wird die bereits beziehungsweise zuvor mit den Speichermodulen gefügte Boden-Kühlstruktur mit der Seitenwandstruktur gefügt, wodurch die Speichermodule in den teilweise durch die Seitenwandstruktur und teilweise durch die Boden-Kühlstruktur begrenzenden Aufnahmeraum des Speicherkastens angeordnet werden. Die Seitenwandstruktur begrenzt den Aufnahmeraum beispielsweise entlang einer senkrecht zur ersten Richtung verlaufenden zweiten Richtung und entlang einer dritten Richtung, welche senkrecht zur ersten Richtung und senkrecht zur zweiten Richtung verläuft. Hierzu umfasst die Seitenwandstruktur beispielsweise erste Seitenwände, welche entlang der zweiten Richtung voneinander beabstandet sind und somit den Aufnahmeraum entlang der zweiten Richtung seitlich begrenzen. Des Weiteren umfasst die Seitenwandstruktur beispielsweise zweite Seitenwände, welche entlang der dritten Richtung voneinander beabstandet sind und somit den Aufnahmeraum entlang der dritten Richtung seitlich begrenzen. Mittels des erfindungsgemäßen Verfahrens kann zum einen eine besonders vorteilhafte Kühlung der Speichermodule und somit des Hochvolt-Energiespeichers realisiert werden, da - wie zuvor beschrieben - ein besonders vorteilhafter Wärmeübergang von den Speichermodulen an die Boden-Kühlstruktur und von dieser an das Kühlfluid realisiert werden kann. Zum anderen kann die vorteilhafte Kühlung auf besonders einfache und insbesondere kostengünstige Weise realisiert werden, da der vierte Schritt zeitlich nach dem dritten Schritt durchgeführt wird. Somit werden die Speichermodule mit der Boden-Kühlstruktur in einem Zustand gefügt, in welchem die Boden-Kühlstruktur noch von der Seitenwandstruktur gelöst beziehungsweise getrennt ist, das heißt bevor die Seitenwandstruktur mit der Boden-Kühlstruktur verbunden wird. Erst nachdem die Speichermodule mit der Boden-Kühlstruktur gefügt wurden, wird die Boden-Kühlstruktur mit der Seitenwandstruktur gefügt, sodass der Hochvolt-Energiespeicher zeit- und kostengünstig hergestellt werden kann.

Da die Boden-Kühlstruktur und die Seitenwandstruktur die separat voneinander ausgebildeten Komponenten des Speicherkastens sind, wobei die Komponenten zunächst voneinander getrennt sind und dann miteinander verbunden werden, ist der Speicherkasten mehrteilig, das heißt als ein mehrteiliger Speicherkasten, ausgebildet, welcher die beschriebene Reihenfolge des dritten Schritts und des vierten Schritts und in der Folge eine einfache und kostengünstige Herstellung ermöglicht. Ist der Hochvolt-Energiespeicher beispielsweise als Hochvolt-Batterie ausgebildet, so wird der Speicherkasten auch als Batteriekasten bezeichnet.

Der Erfindung liegt insbesondere die folgende Erkenntnis zugrunde: Moderne Hochvolt-Batteriespeichersysteme, insbesondere für Elektrofahrzeuge (BEVs) sollten hohe Unfallanforderungen erfüllen und somit ein besonders vorteilhaftes Unfallverhalten aufweisen, gegen Umwelteinflüsse wie Feuchtigkeit abgedichtet sein und eine möglichst hohe Anzahl an Speichermodulen beziehungsweise Speicherzellen aufnehmen können, um eine hohe Energiedichte, das heißt große elektrische Leistungen, erreichen zu können. Zudem sollten die Speichermodule so befestigt sein, dass übermäßige Bewegungen beziehungsweise Verschiebungen der Speichermodule während eines Unfalls vermieden werden. Gleichzeitig ist es wünschenswert, dass die Speichermodule bei einem Servicefall beziehungsweise bei einer Reparatur oder Wartung einfach demontiert, das heißt aus dem Aufnahmeraum entnommen werden können. Zudem sollte eine Wärmeabfuhr von thermischer Energie aus den Speichermodulen möglich sein.

Dies führt üblicherweise dazu, dass ein dichtes Speichergehäuse mit einer Gefachestruktur eingesetzt wird, wobei die einfach auch als Module bezeichneten Speichermodule in das Batteriegehäuse eingeschraubt und/oder eingeklemmt werden. Eine Dichtung des Batteriegehäuses wird beispielsweise durch Verwendung einer tiefgezogenen Wanne, durch Dichtschweißen einer Wannenstruktur oder durch Abdichten mittels einer Dichtung sichergestellt.

Je nach Konzept wird anschließend eine Kühlwendel in die Speichermodule beziehungsweise in das Batteriegehäuse eingelegt oder die Module werden durch sogenannte Lückenpads (Gappads) oder Lückenfüller (Gapfiller) thermisch an einen Boden und/oder einen Deckel des Batteriegehäuses angebunden, in den die Kühlung integriert ist beziehungsweise die Kühlung angefügt ist.

Nachteilig bei herkömmlichen Hochvolt-Energiespeichern ist üblicherweise die hohe Anzahl an Wärmeübergängen, da durch jeden Wärmeübergang die Effizienz der Kühlung reduziert wird. Zudem sind die sehr dünnen Kühlprofile kostenintensiv in der Herstellung, und es wird ein zusätzlicher Prozess zum Anbinden der Profile an das Gehäuse benötigt. Weiterhin muss üblicherweise ein Spalt von bis zu 3 Millimetern kostenintensiv mit einem Lückenfüller gefüllt werden. Der Gapfiller muss mithilfe einer Schraubtechnik verdrängt werden, was zu hohen Nacharbeitsraten aufgrund fehlerhafter Schraubkurven führen kann. Zudem hat der Gapfiller gute Hafteigenschaften, weshalb sehr hohe Kräfte zum Demontieren der Module aufgebracht werden müssen. Eine Reduktion der Kräfte wäre durch ein Abschälen der Module möglich, was jedoch von der Gefachestruktur nicht zugelassen wird.

Hinsichtlich eingeschraubter Module mit in die Batteriewanne gelegten Profilen beziehungsweise Rohren als Kühlung kann es bei einer Beschädigung der Rohre und einem damit einhergehenden Austritt von Kühlflüssigkeit zu unerwünschten Effekten kommen. Bei eingeschraubten Modulen und in den Wannenboden beziehungsweise Wannendeckel integrierter Kühlung kann zwar die Anzahl an thermischen Übergängen signifikant reduziert werden, allerdings muss weiterhin ein Spalt von bis zu 3 Millimetern kostenintensiv mit Gapfiller gefüllt werden. Der Gapfiller muss mithilfe einer Schraubentechnik verdrängt werden, was zu hohen Nacharbeitsraten aufgrund fehlerhafter Schraubkurven führen kann. Zudem hat - wie bereits beschrieben - der Gapfiller gute Hafteigenschaften, weshalb sehr hohe Kräfte zum Demontieren der Module aufgebracht werden müssen.

Die zuvor genannten Nachteile und Probleme können mittels des erfindungsgemäßen Verfahrens vermieden werden. Insbesondere ermöglicht das erfindungsgemäße Verfahren die Realisierung einer einfachen und somit zeit- und kostengünstig durchführbaren Demontierbarkeit, in deren Rahmen die Speichermodule auf einfache Weise aus dem Aufnahmeraum entnommen und somit beispielsweise repariert oder gewartet oder ausgetauscht werden können.

Um beispielsweise die Speichermodule auf besonders einfache Weise aus dem Aufnahmeraum entnehmen und somit reparieren, warten oder austauschen zu können, ist es bei einer Ausführungsform der Erfindung vorgesehen, dass bei dem vierten Schritt die Boden-Kühlstruktur reversibel lösbar mit der Seitenwandstruktur verbunden wird. Mit anderen Worten wird bei dem vierten Schritt die Boden-Kühlstruktur zerstörungsfrei lösbar mit der Seitenwandstruktur verbunden, sodass die Boden-Kühlstruktur nach ihrem Verbinden mit der Seitenwandstruktur von der Seitenwandstruktur gelöst werden kann, ohne dass es zu einer Beschädigung oder Zerstörung der Seitenwandstruktur oder der Boden-Kühlstruktur kommt.

Eine weitere Ausführungsform zeichnet sich dadurch aus, dass bei dem vierten Schritt die Boden-Kühlstruktur, insbesondere reversibel lösbar, mit der Seitenwandstruktur verschraubt wird. Hierdurch kann ein besonders fester Zusammenhalt der Boden-Kühlstruktur mit der Seitenwandstruktur realisiert werden, sodass der Aufnahmeraum besonders vorteilhaft abgedichtet werden kann.

Außerdem kann durch die Integration der Kühlkanäle in die Boden-Kühlstruktur ein unerwünschtes Austreten beziehungsweise eine unerwünschte Strömung des Kühlfluids vermieden werden, sodass ein besonders vorteilhaftes Unfallverhalten des Speicherkastens und somit des Hochvolt-Energiespeichers insgesamt dargestellt werden kann.

Als weiterhin besonders vorteilhaft hat es sich gezeigt, wenn die Boden-Kühlstruktur gegen die Seitenwandstruktur mittels wenigstens eines zusätzlich zu der Boden-Kühlstruktur und zusätzlich zu der Seitenwandstruktur vorgesehenen Dichtungselements abgedichtet wird. Hierdurch kann beispielsweise ein unerwünschtes Austreten von Medien aus dem Aufnahmeraum an die Umgebung des Speicherkastens sicher vermieden werden, sodass ein besonders vorteilhaftes Unfallverhalten dargestellt werden kann.

Um dabei eine besonders gute Abdichtung zu realisieren, ist es in weiterer Ausgestaltung der Erfindung vorgesehen, dass das Dichtungselement zumindest teilweise zwischen der Boden-Kühlstruktur und der Seitenwandstruktur angeordnet wird.

Bei einer besonders vorteilhaften Ausführungsform der Erfindung wird als das Dichtungselement eine Dichtung verwendet, welche in festem Aggregatzustand an der Boden-Kühlstruktur oder der Seitenwandstruktur angeordnet und somit beispielsweise zumindest teilweise zwischen der Boden-Kühlstruktur und der Seitenwandstruktur angeordnet wird. Als die Dichtung kann beispielsweise eine Schaumdichtung oder aber eine Formdichtung beziehungsweise eine Gummidichtung verwendet werden.

In weiterer, besonders vorteilhafter Ausgestaltung der Erfindung wird das Dichtungselement in flüssigem beziehungsweise viskosem oder festem Zustand an der Boden-Kühlstruktur oder der Seitenwandstruktur angeordnet. Somit wird beispielsweise als das Dichtungselement eine Flüssigdichtung oder eine Viskose-Dichtung verwendet, wodurch auf kostengünstige Weise eine besonders gute Dichtheit geschaffen werden kann.

Um eine besonders vorteilhafte thermische Anbindung der Speichermodule an die Boden-Kühlstruktur realisieren zu können, ist es in weiterer Ausgestaltung der Erfindung vorgesehen, dass bei dem dritten Schritt die Speichermodule mit dem zumindest einen Deckelement stoffschlüssig verbunden, insbesondere verklebt und dadurch stoffschlüssig, werden. Hierzu wird vorzugsweise ein Klebstoff mit einer hohen Wärmeleitfähigkeit verwendet, sodass ein besonders vorteilhafter Wärmeübergang von den Speichermodulen an das zumindest eine Deckelement und somit an die Boden-Kühlstruktur gewährleistet werden kann.

In weiterer Ausgestaltung der Erfindung weist die Boden-Kühlstruktur mehrere Bodenelemente auf, welche teilweise nebeneinander angeordnet sind und sich teilweise gegenseitig überlappen. Hierdurch können beispielsweise die Bodenelemente zueinander sowie zur Seitenwandstruktur besonders vorteilhaft abgedichtet werden, wodurch auf kostengünstige Weise ein vorteilhaftes Unfallverhalten darstellbar ist.

Bei einer weiteren Ausführungsform der Erfindung weist die Seitenwandstruktur Streben auf, welche bei dem vierten Schritt in dem Aufnahmeraum angeordnet werden und dadurch den Aufnahmeraum in jeweilige Aufnahmekammern unterteilen, in welchen bei dem vierten Schritt die Speichermodule angeordnet werden. Durch die Streben kann beispielsweise auf gewichts- und kostengünstige Weise eine besonders hohe Steifigkeit realisiert werden, sodass ein besonders vorteilhaftes Unfallverhalten des Hochvolt-Energiespeichers gewährleistet werden kann.

Außerdem ermöglichen die Aufnahmekammern beziehungsweise die Streben eine Abschottung der Speichermodule zueinander, sodass beispielsweise die Ausbreitung eines thermischen Ereignisses beziehungsweise ein Übergreifen eines solchen thermischen Ereignisses von Speichermodul zu Speichermodul zumindest verlangsamt werden kann.

Hierbei hat es sich als besonders vorteilhaft gezeigt, wenn in der jeweiligen Aufnahmekammer genau eines der Speichermodule angeordnet wird. Dadurch kann das jeweilige Speichermodul besonders gut geschützt werden, sodass ein vorteilhaftes Unfallverhalten realisiert werden kann.

Ein zweiter Aspekt der Erfindung betrifft einen Hochvolt-Energiespeicher für ein Kraftfahrzeug, wobei der Hochvolt-Energiespeicher mittels eines erfindungsgemäßen Verfahrens hergestellt ist. Zur Erfindung gehören auch Weiterbildungen des erfindungsgemäßen Hochvolt-Energiespeichers, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Hochvolt-Energiespeichers hier nicht noch einmal beschrieben.

Ferner gehört zur Erfindung ein Kraftfahrzeug, welches einen erfindungsgemäßen Hochvolt-Energiespeicher beziehungsweise wenigstens einen Hochvolt-Energiespeicher aufweist, welcher mittels eines erfindungsgemäßen Verfahrens hergestellt ist.

Im Folgenden sind Ausführungsbeispiele der Erfindung beschrieben. Hierzu zeigt:
- Fig. 1: schematische Ansichten von Schritten eines erfindungsgemäßen Verfahrens zum Herstellen eines Hochvolt-Energiespeichers für ein Kraftfahrzeug;
- Fig. 2: ausschnittsweise schematische Perspektivansichten von mit Boden-Kühlstrukturen verklebten Speichermodulen des Hochvolt-Energiespeichers;
- Fig. 3: eine schematische Ansicht eines vierten Schritts des Verfahrens;
- Fig. 4: eine schematische Perspektivansicht des Hochvolt-Energiespeichers; und
- Fig. 5: eine schematische Schnittansicht des Hochvolt-Energiespeichers.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

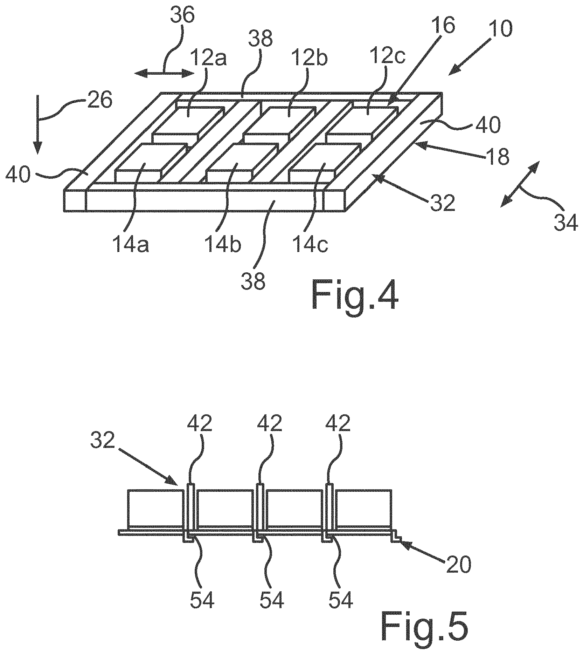

Im Folgenden werden anhand der Fig. Ausführungsformen eines Verfahrens zum Herstellen eines Hochvolt-Energiespeichers 10 (Fig. 4) für ein Kraftfahrzeug erläutert. Mittels des Hochvolt-Energiespeichers 10 beziehungsweise in dem Hochvolt-Energiespeicher 10 kann elektrische Energie beziehungsweise elektrischer Strom gespeichert werden. In vollständig hergestelltem Zustand weist das Kraftfahrzeug den Hochvolt-Energiespeicher 10 und wenigstens eine elektrische Maschine auf, mittels welcher das Kraftfahrzeug elektrisch angetrieben werden kann. Das Kraftfahrzeug ist beispielsweise als Elektrofahrzeug oder aber als Hybridfahrzeug ausgebildet. Um das Kraftfahrzeug mittels der elektrischen Maschine elektrisch anzutreiben, wird die elektrische Maschine als Elektromotor und somit in einem Motorbetrieb betrieben. Hierzu wird die elektrische Maschine mit elektrischer Energie versorgt, die in dem Hochvolt-Energiespeicher 10 gespeichert ist. Da das Kraftfahrzeug mittels der elektrischen Maschine elektrisch angetrieben werden kann, wird die elektrische Maschine auch als Traktionsmaschine bezeichnet. Demzufolge wird der Hochvolt-Energiespeicher 10 auch als Traktionsspeicher bezeichnet.

Der Hochvolt-Energiespeicher 10 ist eine Hochvolt-Komponente, deren elektrische Spannung, insbesondere elektrische Betriebsspannung, größer als 50 Volt ist. Insbesondere beträgt die elektrische Spannung mehrere 100 Volt, um damit besonders hohe elektrische Leistungen zum Antreiben des Kraftfahrzeugs realisieren zu können. Insbesondere ist der Hochvolt-Energiespeicher 10 eine Batterie, das heißt eine Hochvolt-Batterie.

Wie im Folgenden noch genauer erläutert wird und anhand von Fig. 4 erkennbar ist, werden im Rahmen des Verfahrens Speichermodule 12a-c und 14a-c in einem Aufnahmeraum 16 eines auch als Batteriekasten bezeichneten Speicherkastens 18 angeordnet.

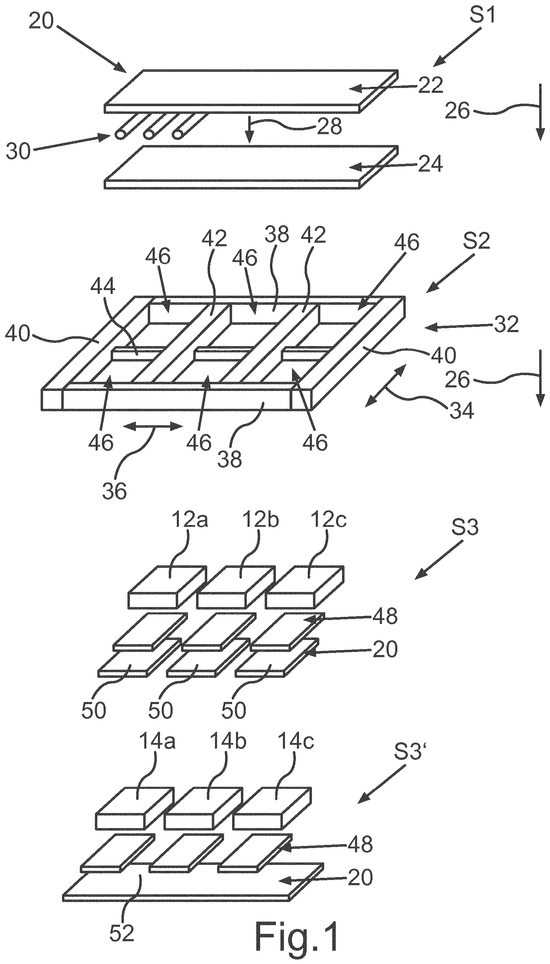

Um nun auf besonders vorteilhafte Weise eine besonders vorteilhafte Kühlung und ein besonders vorteilhaftes Unfallverhalten des Hochvolt-Energiespeichers 10 realisieren zu können, weist das Verfahren einen ersten Schritt S1 auf. Bei dem ersten Schritt S1 wird eine Boden-Kühlstruktur 20 des Speicherkastens 18 bereitgestellt. Insbesondere wird die Boden-Kühlstruktur 20 bei dem ersten Schritt S1 hergestellt. Aus Fig. 1 ist erkennbar, dass die Boden-Kühlstruktur 20 ein erstes Deckelement 22 und ein zweites Deckelement 24 aufweist, welche beispielsweise aufeinander und dabei in einem Abstand zueinander angeordnet und miteinander verbunden werden. Wie in Zusammenschau mit Fig. 4 erkennbar ist, wird die Boden-Kühlstruktur 20 genutzt, um den Aufnahmeraum 16 in eine in Fig. 4 durch einen Pfeil 26 veranschaulichte erste Richtung zu begrenzen, sodass die Boden-Kühlstruktur 20 ein Boden des Speicherkastens 18 ist. In Einbaulage des Hochvolt-Energiespeichers 10 fällt die durch den Pfeil 26 veranschaulichte erste Richtung mit der Fahrzeughochrichtung zusammen und verläuft dabei in Fahrzeughochrichtung nach unten. Dabei nimmt der Hochvolt-Energiespeicher 10 seine Einbaulage in vollständig hergestelltem Zustand des Kraftfahrzeugs ein. Die Deckelemente 22 und 24 sind dabei entlang der ersten Richtung übereinander angeordnet und voneinander beabstandet und werden - wie in Fig. 1 durch einen Pfeil 28 veranschaulicht ist - bei dem ersten Schritt S1 aufeinander beziehungsweise übereinander angeordnet und miteinander verbunden.

Das jeweilige Deckelement 22 beziehungsweise 24 ist beispielsweise eine Platte. Insbesondere kann das jeweilige Deckelement 22 und 24 aus einem Blech gebildet sein, sodass beispielsweise das Deckelement 22 ein Bodenblech und das Deckelement 24 ein Kühlungsblech der Boden-Kühlstruktur 20 ist. Die Boden-Kühlstruktur 20 weist darüber hinaus in Fig. 1 besonders schematisch dargestellte und von einem Kühlfluid, insbesondere von einer Kühlflüssigkeit, durchströmbare Kühlkanäle 30 auf, welche entlang der ersten Richtung zwischen den Deckelementen 22 und 24 angeordnet sind. Die Kühlkanäle 30 sind beispielsweise fluidisch miteinander verbunden, sodass die Kühlkanäle 30 einen zusammenhängenden und von dem Kühlfluid durchströmbaren Gesamtkühlkanal bilden. Insbesondere werden die Kühlkanäle 30 jeweils zumindest teilweise, insbesondere vollständig, durch die Deckelemente 22 und 24 gebildet beziehungsweise begrenzt, sodass beispielsweise das die Kühlkanäle 30 durchströmende Kühlfluid die Deckelemente 22 und 24 direkt anströmen und somit direkt berühren beziehungsweise kontaktieren kann. Dadurch kann ein besonders vorteilhafter Wärmeübergang von den Deckelementen 22 und 24 an das die Kühlkanäle 30 durchströmende Kühlfluid gewährleistet werden. Mit anderen Worten werden die Kühlkanäle 30 beispielsweise durch die Deckelemente 22 und 24 selbst gebildet oder die Kühlkanäle 30 werden durch wenigstens ein separat von den Deckelementen 22 und 24 ausgebildetes und zusätzlich dazu vorgesehenes Leitungselement gebildet, welches zwischen den Deckelementen 22 und 24 angeordnet wird, insbesondere entlang der ersten Richtung.

Bei einem zweiten Schritt S2 des Verfahrens wird eine separat von der Boden-Kühlstruktur 20 ausgebildete Seitenwandstruktur 32 des Speicherkastens 18 bereitgestellt. Die Seitenwandstruktur 32 wird genutzt, um den Aufnahmeraum 16 in eine in Fig. 4 durch einen Pfeil 34 veranschaulichte zweite Richtung zu begrenzen, welche senkrecht zur ersten Richtung verläuft. Außerdem wird die Seitenwandstruktur 32 genutzt, um den Aufnahmeraum 16 in eine durch einen Doppelpfeil 36 veranschaulichte dritte Richtung zu begrenzen, welche senkrecht zur ersten Richtung und senkrecht zur zweiten Richtung verläuft. Hierzu weist die Seitenwandstruktur 32 erste Seitenwände 38 auf, welche entlang der zweiten Richtung voneinander beabstandet sind und den Aufnahmeraum 16 entlang der zweiten Richtung begrenzen. Des Weiteren weist die Seitenwandstruktur 32 zweite Seitenwände 40 auf, welche entlang der dritten Richtung voneinander beabstandet sind und den Aufnahmeraum 16 entlang der dritten Richtung begrenzen. Die Seitenwände 38 und 40 sind miteinander verbunden.

Die Seitenwandstruktur 32 weist darüber hinaus zwischen den Seitenwänden 38 und 40 angeordnete Streben 42 und 44 auf. Die jeweilige Strebe 42 ist beispielsweise an die jeweiligen Seitenwände 38 angebunden, während die Strebe 44 an die Seitenwände 40 angebunden ist. Ferner kann die jeweilige Strebe 44 mit der jeweiligen Strebe 42 verbunden sein.

Besonders gut aus Fig. 1 ist erkennbar, dass durch die Streben 42 und 44 der Aufnahmeraum 16 in jeweilige Aufnahmekammern 46 unterteilt ist. Die jeweilige Aufnahmekammer 46 wird auch als Fach oder Gefach bezeichnet, sodass die Seitenwandstruktur 32 beziehungsweise der Speicherkasten 18 insgesamt eine Gefachestruktur aufweist. Ferner ist aus Fig. 1 erkennbar, dass die Seitenwandstruktur 32 eine Rahmenform aufweist beziehungsweise einen Rahmen bildet, in welchem die Speichermodule 12a-c und 14a-c zumindest teilweise, insbesondere zumindest überwiegend oder vollständig, aufnehmbar sind beziehungsweise aufgenommen sind. Die Schritte S1 und S2 können in beliebiger Reihenfolge durchgeführt werden.

Das Verfahren umfasst ferner einen dritten Schritt S3 beziehungsweise S3', welcher nach dem ersten Schritt S1 und nach dem zweiten Schritt S2 durchgeführt wird. Eine erste der zuvor genannten Ausführungsformen umfasst dabei den dritten Schritt S3, wobei eine zweite der zuvor genannten Ausführungsformen den dritten Schritt S3' umfasst. Bei dem dritten Schritt S3 beziehungsweise S3' werden die Speichermodule 12a-c beziehungsweise 14a-c mit der Boden-Kühlstruktur 20 gefügt, indem die Speichermodule 12a-c und 14a-c mit der Boden-Kühlstruktur stoffschlüssig verbunden werden. Hierzu werden die Speichermodule 12a-c beziehungsweise 14a-c mit zumindest einem der Deckelemente 22 und 24 stoffschlüssig verbunden. Insbesondere werden die Speichermodule 12a-c und 14a-c beispielsweise mit dem Deckelement 22 und/oder mit dem Deckelement 24 und somit beispielsweise mit dem Bodenblech und/oder mit dem Kühlungsblech verbunden.

Um eine besonders vorteilhafte thermische Anbindung der Speichermodule 12a-c und 14a-c an die Boden-Kühlstruktur 20 zu gewährleisten, werden beispielsweise die Speichermodule 12a-c und 14a-c mit dem zumindest einen Deckelement 22 beziehungsweise 24 verklebt und dadurch stoffschlüssig mit dem zumindest einen Deckelement 22 beziehungsweise 24 verbunden. Hierzu wird ein wärmeleitender Klebstoff 48 verwendet, mittels welchem die Speichermodule 12a-c und 14a-c mit dem zumindest einen Deckelement 22 beziehungsweise 24 und somit mit der Boden-Kühlstruktur 20 verklebt und dadurch stoffschlüssig verbunden werden. Die Boden-Kühlstruktur 20 ist eine integrale Boden-Kühlstruktur, da die Kühlkanäle 30 in die Boden-Kühlstruktur 20 integriert sind.

Bei der den dritten Schritt S3 aufweisenden ersten Ausführungsform weist beispielsweise die Boden-Kühlstruktur 20 je Speichermodul 12a-c genau ein Bodenelement 50 auf, welches mit genau einem der Speichermodule 12a-c mittels des Klebstoffes 48 verklebt wird. Die beispielsweise zunächst voneinander getrennten und separat voneinander ausgebildeten Bodenelemente 50 werden beispielsweise miteinander verbunden, insbesondere nachdem das jeweilige Bodenelement 50 mit dem jeweils zugehörigen Speichermodul 12a-c verbunden wurde.

Bei der den dritten Schritt S3' aufweisenden zweiten Ausführungsform ist beispielsweise einer gegenüber 1 größeren Anzahl der Speichermodule 14a-c genau ein Bodenelement 52 der Boden-Kühlstruktur 20 zugeordnet, wobei die mehreren Speichermodule 14a-c, die dem den Speichermodulen 14a-c zugeordneten Bodenelement 52 zugeordnet sind, mittels des Klebstoffs 48 mit dem Bodenelement 52 verbunden werden. Insbesondere ist es bei der zweiten Ausführungsform vorgesehen, dass alle Speichermodule 14a-c dem genau einen Bodenelement 52 beziehungsweise der Boden-Kühlstruktur 20 zugeordnet sind, sodass beispielsweise alle Speichermodule 14a-c mittels des Klebstoffs 48 mit dem den Speichermodulen 14a-c gemeinsamen Bodenelement 52 beziehungsweise der Boden-Kühlstruktur 20 verklebt werden.

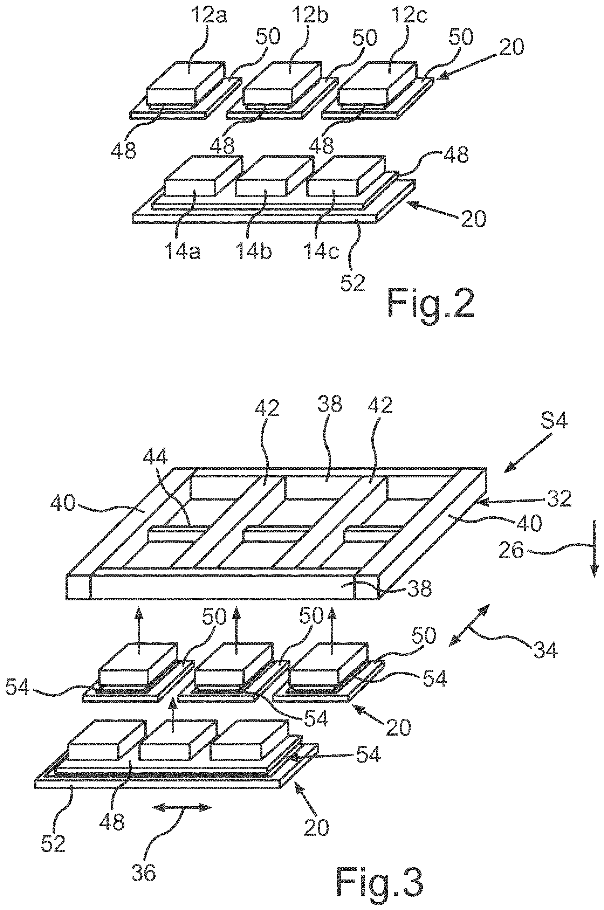

Fig. 2 zeigt in schematischen Perspektivansichten die mit der Boden-Kühlstruktur 20 verklebten und dadurch stoffschlüssig verbundenen Speichermodule 12a-c beziehungsweise 14a-c. Die mit der Boden-Kühlstruktur 20 verklebten Speichermodule 12a-c und 14a-c bilden somit jeweilige, zusammenhängende beziehungsweise zusammengebaute, Baueinheiten, welche zunächst noch von der Seitenwandstruktur 32 getrennt beziehungsweise gelöst sind.

Nach dem dritten Schritt S3 beziehungsweise S3' wird ein in Fig. 3 veranschaulichter vierter Schritt S4 des Verfahrens durchgeführt. Dabei ist in Fig. 3 der vierte Schritt S4 sowohl für die erste Ausführungsform als auch für die zweite Ausführungsform des Verfahrens veranschaulicht. Bei dem vierten Schritt S4 wird die mit den Speichermodulen 12a-c und 14a-c gefügte Boden-Kühlstruktur 20 mit der Seitenwandstruktur 32 gefügt, wodurch die Speichermodule 12a-c und 14a-c in dem teilweise durch die Seitenwandstruktur 32 und teilweise durch die Boden-Kühlstruktur 20 begrenzten Aufnahmeraum 16 des Speicherkastens 18 angeordnet werden. Insgesamt ist aus Fig. 1 bis 3 erkennbar, dass die Speichermodule 12a-c und 14a-c mit der Boden-Kühlstruktur 20 gefügt werden, während die Boden-Kühlstruktur 20 noch von der Seitenwandstruktur 32 getrennt, das heißt noch nicht von der Seitenwandstruktur 32 getrennt ist. Außerdem ist erkennbar, dass die Boden-Kühlstruktur 20 mit der Seitenwandstruktur 32 gefügt wird, während die Speichermodule 12a-c und 14a-c bereits mit der Boden-Kühlstruktur 20 gefügt sind. Hierdurch kann der Hochvolt-Energiespeicher 10 besonders zeit- und kostengünstig hergestellt werden.

Die integrale Boden-Kühlstruktur 20 wird beispielsweise durch Roll-Bonding und/oder Kleben und/oder Löten hergestellt. Mit anderen Worten werden die Deckelemente 22 und 24 beispielsweise stoffschlüssig miteinander verbunden. Beispielsweise werden die Deckelemente 22 und 24 durch Kleben und/oder Löten miteinander verbunden. Ferner ist es denkbar, dass die Deckelemente 22 und 24 durch Umformen, insbesondere durch Rollen, miteinander verbunden werden. Insbesondere können die Deckelemente 22 und 24 durch Roll-Bonding miteinander verbunden werden. Hierbei werden die Deckelemente 22 und 24 durch hohen Druck miteinander gefügt.

Bei dem vierten Schritt S4 wird die Boden-Kühlstruktur 20 vorzugsweise reversibel lösbar mit der Seitenwandstruktur 32 verschraubt und dadurch mit der Seitenwandstruktur 32 gefügt, sodass dann die Speichermodule 12a-c und 14a-c auf einfache Weise wieder demontiert werden können. Mittels des Verfahrens können insbesondere die folgenden Vorteile realisiert werden:
- minimale Spalte zwischen dem jeweiligen Speichermodul 12a-c und 14a-c und der Boden-Kühlstruktur 20 des Speicherkastens 18, wodurch mit einem geringen Materialeinsatz ein vorteilhafter Wärmeübergang und somit eine vorteilhafte Wärmeabfuhr realisiert werden können,
- Entkopplung der Montage der einfach auch als Module bezeichneten Speichermodule 12a-c und 14a-c von dem eigentlichen Batteriemontageprozess, sodass beispielsweise die Seitenwandstruktur 32 und/oder die jeweilige zuvor genannte Baueinheit als Baugruppe an einem Montageband geliefert werden können,
- Reduktion der sogenannten S-Zeiten,
- einfache Demontage durch optimierte Zugänglichkeit, da ein Abschälen der Module von der Boden-Kühlstruktur 20 auf einfache Weise möglich ist,
- Zum Tausch der Module ist kein Ausbau des gesamten Speicherkastens 18 notwendig, sondern die Seitenwandstruktur 32 kann beispielsweise an dem Kraftfahrzeug montiert verbleiben, während die Boden-Kühlstruktur 20 und mit dieser die Module von der Seitenwandstruktur 32 gelöst werden.

Besonders gut aus Fig. 3 ist erkennbar, dass die Module auf besonders einfache Weise derart gewartet, repariert oder ausgetauscht werden können, dass die Boden-Kühlstruktur 20 von der Seitenwandstruktur 32 gelöst wird, insbesondere während die Seitenwandstruktur 32 am Kraftfahrzeug montiert bleibt. Da die Streben 42 und 44 Bestandteile der Seitenwandstruktur 32 sind, werden die Boden-Kühlstruktur 20 und mit dieser die Module auch von den Streben 42 und 44 gelöst, sodass die zuvor beschriebene Gefachestruktur ein Abschälen der Module von der Boden-Kühlstruktur 20 nicht behindert.

Im Rahmen des Abschälens können die Module auf einfache Weise von der Boden-Kühlstruktur 20 gelöst werden. Daraufhin können beispielsweise andere beziehungsweise neue Module mit der Boden-Kühlstruktur 20 gefügt, insbesondere verklebt, werden.

Bevor die Boden-Kühlstruktur 20 mit der Seitenwandstruktur 32 verbunden wird, wird beispielsweise auf jeweilige Dichtlinien wenigstens ein Dichtungselement insbesondere in Form einer Formdichtung oder einer Viskosedichtung aufgebracht. Hierzu wird das Dichtungselement beispielsweise auf die Seitenwandstruktur 32 oder vorliegend auf die Boden-Kühlstruktur 20 und dabei auf das zumindest eine Deckelement 22 beziehungsweise 24 aufgebracht, wobei das Dichtungselement in Fig. 3 mit 54 bezeichnet ist.

Insbesondere ist je Bodenelement 50 beziehungsweise 52 ein Dichtungselement 54 vorgesehen, um das jeweilige Bodenelement 50 beziehungsweise 52 und somit die Boden-Kühlstruktur 20 insgesamt besonders vorteilhaft gegen die Seitenwandstruktur 32 abdichten zu können. Dadurch kann der Aufnahmeraum 16 besonders vorteilhaft abgedichtet werden.

Um beispielsweise eine hinreichend große Dichtfläche insgesamt realisieren zu können, kann vorgesehen sein, dass die Bodenelemente 50 teilweise nebeneinander angeordnet sind und sich teilweise gegenseitig überlappen, sodass eine besonders gut aus Fig. 5 erkennbare kaskadierte Bodenstruktur realisiert ist. Mit anderen Worten ist die Bodenstruktur dann kaskadiert geschachtelt. Dabei wird beispielsweise das jeweilige Dichtungselement 54 genutzt, um die kaskadiert geschachtelten Bodenelemente 50 gegenseitig und gegen die Seitenwandstruktur 32 abzudichten. Die eine Bodenstruktur darstellende Boden-Kühlstruktur 20 hat vorzugsweise mindestens die Fläche eines Moduls und maximal die Fläche des kompletten Speicherkastens 18. Dabei werden die Module mit der Bodenstruktur gefügt. Bevorzugt werden die Module mit der Bodenstruktur wärmleitfähig verklebt. Dies erfolgt durch Aufbringen des Klebstoffes 48 auf das zumindest eine Deckelement 22 beziehungsweise 24 oder auf einen jeweiligen Modulboden des jeweiligen Moduls. Anschließend wird das jeweilige Modul mit der Boden-Kühlstruktur 20 verpresst, um die Module fest mit der Boden-Kühlstruktur 20 stoffschlüssig zu verbinden. Hierbei wird ein minimaler Klebstoffspalt eingestellt. Daraus entsteht eine integrale Struktur in Form der zuvor genannten Baueinheit, welche dann mit dem Speicherkasten 18 beziehungsweise mit der Seitenwandstruktur 32 gefügt wird. Hierzu wird beispielsweise auf das zumindest eine Deckelement 22 beziehungsweise 24 das Dichtungselement 54 aufgebracht, welches beispielsweise eine Formdichtung, eine Schaumdichtung oder eine Viskose-Dichtung ist. Dann wird die mit den Modulen verklebte und mit dem Dichtungselement 54 versehene Boden-Kühlstruktur 20 in die Seitenwandstruktur 32 und dabei in die Gefachestruktur eingesetzt und mittels einer weiteren Fügetechnologie mit der Seitenwandstruktur 32 gefügt. Als die Fügetechnologie wird vorzugsweise ein Schraubprozess vorgesehen, in dessen Rahmen die Boden-Kühlstruktur 20 reversibel lösbar mit der Seitenwandstruktur 32 verschraubt wird. Dadurch können anschließend die Module wieder einfach demontiert werden.

## Patentansprüche

1. Verfahren zum Herstellen eines zum Speichern von elektrischer Energie ausgebildeten Hochvolt-Energiespeichers (10) für ein Kraftfahrzeug, bei welchem Speichermodule (12a-c, 14a-c) zumindest teilweise in einem Aufnahmeraum (16) eines Speicherkastens (18) des Hochvolt-Energiespeichers (10) angeordnet werden, das die folgenden Schritte aufweist:
a) Bereitstellen einer Boden-Kühlstruktur (20) des Speicherkastens (18), wobei die Boden-Kühlstruktur (20) zwei voneinander beabstandete Deckelemente (22, 24) und zwischen den Deckelementen (22, 24) verlaufende und von einem Kühlfluid durchströmbare Kühlkanäle (30) aufweist;
b) Bereitstellen einer separat von der Boden-Kühlstruktur (20) ausgebildeten Seitenwandstruktur (32) des Speicherkastens (18);
**gekennzeichnet durch** die weiteren Schritte:
c) Fügen der Speichermodule (12a-c, 14a-c) mit der Boden-Kühlstruktur (20), indem die Speichermodule (12a-c, 14a-c) mit zumindest einem der Deckelemente (22, 24) verbunden werden; und
d) nach Schritt c): Fügen der mit den Speichermodulen (12a-c, 14a-c) gefügten Boden-Kühlstruktur (20) mit der Seitenwandstruktur (32), wodurch die Speichermodule (12a-c, 14a-c) in dem teilweise durch die Seitenwandstruktur (32) und teilweise durch die Boden-Kühlstruktur (20) begrenzten Aufnahmeraum (16) des Speicherkastens (18) angeordnet werden.

2. Verfahren nach Anspruch 1,
**dadurch gekennzeichnet, dass**
bei Schritt d) die Boden-Kühlstruktur (20) reversibel lösbar mit der Seitenwandstruktur (32) verbunden wird.

3. Verfahren nach Anspruch 1 oder 2,
**dadurch gekennzeichnet, dass**
bei Schritt d) die Boden-Kühlstruktur (20), insbesondere reversibel lösbar, mit der Seitenwandstruktur (32) verschraubt wird.

4. Verfahren nach einem der vorhergehenden Ansprüche,
**dadurch gekennzeichnet, dass**
die Boden-Kühlstruktur (20) gegen die Seitenwandstruktur (32) mittels wenigstens eines zusätzlich zu der Boden-Kühlstruktur (20) und zusätzlich zu der Seitenwandstruktur (32) vorgesehenen Dichtungselements (54) abgedichtet wird.

5. Verfahren nach Anspruch 4,
**dadurch gekennzeichnet, dass**
als das Dichtungselement (54) eine Dichtung verwendet wird, welche in festem Aggregatzustand an der Boden-Kühlstruktur (20) oder der Seitenwandstruktur (32) angeordnet wird.

6. Verfahren nach Anspruch 4,
**dadurch gekennzeichnet, dass**
das Dichtungselement (54) in viskosem oder festem Zustand an der Boden-Kühlstruktur (20) oder der Seitenwandstruktur (32) angeordnet wird.

7. Verfahren nach einem der vorhergehenden Ansprüche,
**dadurch gekennzeichnet, dass**
bei Schritt c) die Speichermodule (12a-c, 14a-c) mit dem zumindest einen Deckelement (22, 24) stoffschlüssig verbunden, insbesondere mit dem zumindest einen Deckelement (22, 24) verklebt, werden.

8. Verfahren nach einem der vorhergehenden Ansprüche,
**dadurch gekennzeichnet, dass**
die Boden-Kühlstruktur (20) mehrere Bodenelemente (52) aufweist, welche teilweise nebeneinander angeordnet sind und sich teilweise gegenseitig überlappen.

9. Verfahren nach einem der vorhergehenden Ansprüche,
**dadurch gekennzeichnet, dass**
die Seitenwandstruktur (32) Streben (42, 44) aufweist, welche bei Schritt d) in dem Aufnahmeraum (16) angeordnet werden und dadurch den Aufnahmeraum (16) in jeweilige Aufnahmekammer (46) unterteilen, in welchen bei Schritt d) die Speichermodule (12a-c, 14a-c) angeordnet werden.

10. Verfahren nach Anspruch 9,
**dadurch gekennzeichnet, dass**
in der jeweiligen Aufnahmekammer (46) genau eines der Speichermodule (12a-c, 14a-c) angeordnet wird.

11. Hochvolt-Energiespeicher (10) für ein Kraftfahrzeug, wobei der Hochvolt-Energiespeicher (10) mittels eines Verfahrens nach einem der vorhergehenden Ansprüche hergestellt ist.

## Claims

1. Method for producing a high-voltage energy storage device (10), for storing electrical energy, for a motor vehicle, in which storage modules (12a-c, 14a-c) are at least partially arranged in a mounting frame (16) of a storage box (18) of the high-voltage energy storage device (10),
which has the following steps:
a) provision of a floor cooling structure (20) of the storage box (18), wherein the floor cooling structure (20) has two cover elements (22, 24) and, running between the cover elements (22, 24) and able to be flowed-through by a cooling fluid, cooling channels (30);
b) provision of a side wall structure (32), formed separately from the floor cooling structure (20), of the storage box (18);
**characterised by** the following steps:
c) joining the storage modules (12a-c, 14a-c) with the floor cooling structure (20) in that the storage modules (12a-c, 14a-c) are connected with at least one of the cover elements (22, 24); and
d) after step c): joining the floor cooling structure (20), joined with the storage modules (12a-c, 14a-c), with the side wall structure (32), as a result of which the storage modules (12a-c, 14a-c) are arranged in the mounting frame (16), delimited partly by the side wall structure (32) and partly by the floor cooling structure (20), of the storage box (18).

2. Method according to claim 1,
**characterised in that**
at step d) the floor cooling structure (20) is reversibly releasably connected with the side wall structure (32).

3. Method according to claim 1 or 2,
**characterised in that**
at step d) the floor cooling structure (20) is screwed, in particular reversibly releasably, to the side wall structure (32).

4. Method according to any of the preceding claims,
**characterised in that**
the floor cooling structure (20) is sealed-off from the side wall structure (32) by means of at least one sealing element (54) provided additionally to the floor cooling structure (20) and additionally to the side wall structure (32).

5. Method according to claim 4,
**characterised in that**
as the sealing element (54) is used a seal which is arranged in solid matter state on the floor cooling structure (20) or the side wall structure (32).

6. Method according to claim 4,
**characterised in that**
the sealing element (54) is arranged in viscous or solid state on the floor cooling structure (20) or the side wall structure (32).

7. Method according to any of the preceding claims,
**characterised in that**
at step c) the storage modules (12a-c, 14a-c) are material-fittingly connected with the at least one cover element (22, 24), in particular adhesively bonded with the at least one cover element (22, 24).

8. Method according to any of the preceding claims,
**characterised in that**
the floor cooling element (20) has several floor elements (52) which are partially arranged next to one another and partially overlap one another.

9. Method according to any of the preceding claims,
**characterised in that**
the side wall structure (32) has struts (42, 44) which at step d) are arranged in the mounting frame (16) and thereby divide the mounting frame (16) into respective mounting chambers (46) in which at step d) the storage modules (12a-c, 14a-c) are arranged.

10. Method according to claim 9,
**characterised in that**
in the respective mounting chamber (46) is arranged precisely one of the storage modules (12a-c, 14a-c).

11. High-voltage energy storage device (10) for a motor vehicle, wherein the high-voltage energy storage device (10) is produced by means of a method according to any of the preceding claims.

## Revendications

1. Procédé pour la fabrication d'un accumulateur d'énergie haute tension (10) réalisé pour l'accumulation d'énergie électrique pour un véhicule automobile, dans lequel des modules accumulateurs (12a-c, 14a-c) sont agencés au moins en partie dans un espace de logement (16) d'un boîtier accumulateur (18) de l'accumulateur d'énergie haute tension (10), qui présente les étapes suivantes :
a) mise à disposition d'une structure de refroidissement de fond (20) du boîtier accumulateur (18), dans lequel la structure de refroidissement de fond (20) présente deux éléments de recouvrement (22, 24) espacés l'un de l'autre et des canaux de refroidissement (30) s'étendant entre les éléments de recouvrement (22, 24) et pouvant être traversés par un fluide de refroidissement ;
b) mise à disposition d'une structure de paroi latérale (32) réalisée séparément de la structure de refroidissement de fond (20) du boîtier accumulateur (18) ;
**caractérisé par** les autres étapes de :
c) assemblage des modules accumulateurs (12a-c, 14a-c) avec la structure de refroidissement de fond (20), par le fait que les modules accumulateurs (12a-c, 14a-c) sont reliés à au moins un des éléments de recouvrement (22, 24) ; et
d) après l'étape c) : assemblage de la structure de refroidissement de fond (20) assemblée avec les modules accumulateurs (12a-c, 14a-c) avec la structure de paroi latérale (32), moyennant quoi les modules accumulateurs (12a-c, 14a-c) sont agencés dans l'espace de logement (16) du boîtier accumulateur (18) délimité en partie par la structure de paroi latérale (32) et en partie par la structure de refroidissement de fond (20).

2. Procédé selon la revendication 1,
**caractérisé en ce que**
dans l'étape d) la structure de refroidissement de fond (20) est reliée de manière amovible réversible à la structure de paroi latérale (32).

3. Procédé selon la revendication 1 ou 2,
**caractérisé en ce que**
dans l'étape d) la structure de refroidissement de fond (20) est vissée, en particulier de manière amovible réversible, à la structure de paroi latérale (32).

4. Procédé selon l'une quelconque des revendications précédentes,
**caractérisé en ce que**
la structure de refroidissement de fond (20) est rendue étanche contre la structure de paroi latérale (32) au moyen d'au moins un élément d'étanchéité (54) prévu en plus de la structure de refroidissement de fond (20) et en plus de la structure de paroi latérale (32).

5. Procédé selon la revendication 4,
**caractérisé en ce que**
un joint d'étanchéité est utilisé en tant qu'élément d'étanchéité (54), lequel est agencé à l'état physique solide au niveau de la structure de refroidissement de fond (20) ou de la structure de paroi latérale (32).

6. Procédé selon la revendication 4,
**caractérisé en ce que**
l'élément d'étanchéité (54) est agencé à l'état visqueux ou solide au niveau de la structure de refroidissement de fond (20) ou de la structure de paroi latérale (32).

7. Procédé selon l'une quelconque des revendications précédentes,
**caractérisé en ce que**
dans l'étape c), les modules accumulateurs (12a-c, 14a-c) sont reliés par liaison de matière à l'au moins un élément de recouvrement (22, 24), en particulier collés à l'au moins un élément de recouvrement (22, 24).

8. Procédé selon l'une quelconque des revendications précédentes,
**caractérisé en ce que**
la structure de refroidissement de fond (20) présente plusieurs éléments de fond (52), lesquels sont agencés en partie l'un à côté de l'autre et se chevauchent en partie mutuellement.

9. Procédé selon l'une quelconque des revendications précédentes,
**caractérisé en ce que**
la structure de paroi latérale (32) présente des entretoises (42, 44), lesquelles sont agencées dans l'étape d) dans l'espace de logement (16) et sous-divisent ainsi l'espace de logement (16) en chambres de logement (46) respectives, dans lesquelles dans l'étape d) les modules accumulateurs (12a-c, 14a-c) sont agencés.

10. Procédé selon la revendication 9,
**caractérisé en ce que**
exactement un des modules accumulateurs (12a-c, 14a-c) est agencé dans la chambre de logement (46) respective.

11. Accumulateur d'énergie haute tension (10) pour un véhicule automobile, dans lequel l'accumulateur d'énergie haute tension (10) est fabriqué au moyen d'un procédé selon l'une quelconque des revendications précédentes.
